# EUROPEAN PATENT APPLICATION

(11) **EP 3 567 465 A1**
(43) Date of publication of application: **13.11.2019**
(21) Application number: 19172429.3
(22) Date of filing: 03.05.2019
(51) Int. Cl.: G06F 3/12

(54) **DEVICE MANAGEMENT APPARATUS**

(30) Priority: 07.05.2018 JP 2018089157
(71) Applicant: DGSHAPE Corporation, Hamamatsu-shi, Shizuoka 431-2103 (JP)
(72) Inventor: UEDA, Jun, Hamamatsu-shi,, Shizuoka 431-2103 (JP)
(74) Representative: Grünecker Patent- und Rechtsanwälte PartG mbB

(57) **Abstract**

A device management apparatus is connectable to devices of many types. A first device-name-creation section creates symbols indicative of drivers corresponding to connected devices as device names of the connected devices. A second device-name-creation section adds symbols each indicative of a connection method with the device management apparatus to the symbols created by the first device-name-creation section. A first determination section determines whether or not there is a duplicate symbol among the symbols created by the second device-name-creation section. A third device-name-creation section adds identification symbols to the symbols each being determined to be the duplicate symbol by the first determination section.

## Description

### BACKGROUND OF THE INVENTION

### 1. Field of the Invention

The present invention relates to a device management apparatus.

### 2. Description of the Related Art

Device management systems for managing jobs, for example, of a plurality of devices are conventionally known in the art. Examples of the devices include printers, cutting machines, and three-dimensional printing apparatuses. For example, JP 2010-44748 A discloses a print shop management system including a print shop management apparatus and a plurality of printers that are connected to the print shop management apparatus.

It is often the case that the device management system is connected to a plurality of devices of the same model type. In such cases, the user is unable to distinguish one of the devices from another, and the user has to bear the burden of device management.

### SUMMARY OF THE INVENTION

In view of the foregoing, preferred embodiments of the present invention provide device management apparatuses that are capable of reducing the burden of device management.

A device management apparatus according to a preferred embodiment of the present invention is configured to be connectable to a plurality of devices of a plurality of types. The device management apparatus includes an install unit, a first device-name-creation section, a second device-name-creation section, a first determination section, a third device-name-creation section, and a registering section.

The install unit installs drivers corresponding to connected devices. The first device-name-creation section creates symbols respectively indicative of the drivers corresponding to the connected devices as device names of the connected devices. The second device-name-creation section adds symbols each indicative of a connection method with the device management apparatus to the symbols created by the first device-name-creation section. The first determination section determines whether or not there is a duplicate symbol among the symbols created by the second device-name-creation section. The third device-name-creation section further adds identification symbols to symbols each being determined as the duplicate symbol by the first determination section. The registering section registers the symbols created by the second device-name-creation section or the third device-name-creation section as the device names of the plurality of connected devices.

Preferred embodiments of the device management apparatus make it possible to distinguish a plurality of devices of the same model type when they are connected thereto so that the burden of device management is reduced or eliminated.

The above and other elements, features, steps, characteristics and advantages of the present invention will become more apparent from the following detailed description of the preferred embodiments with reference to the attached drawings.

### BRIEF DESCRIPTION OF THE DRAWINGS

Fig. 1 is a schematic view illustrating an example of the configuration of a device management system according to a preferred embodiment of the present invention.
Fig. 2 is a block diagram of the device management apparatus.
Fig. 3 is a table illustrating the configuration of group names and device names.
Fig. 4 is a schematic view illustrating an example of a simple display.
Fig. 5 is a schematic view illustrating an example of a detailed display.

### DETAILED DESCRIPTION OF THE PREFERRED EMBODIMENTS

Hereinbelow, device management systems according to preferred embodiments of the present invention will be described with reference to the drawings. It should be noted, however, that the preferred embodiments described herein are, of course, not intended to limit the present invention. The features and components that exhibit the same effects are denoted by the same reference symbols, and repetitive description thereof may be omitted or simplified as appropriate.

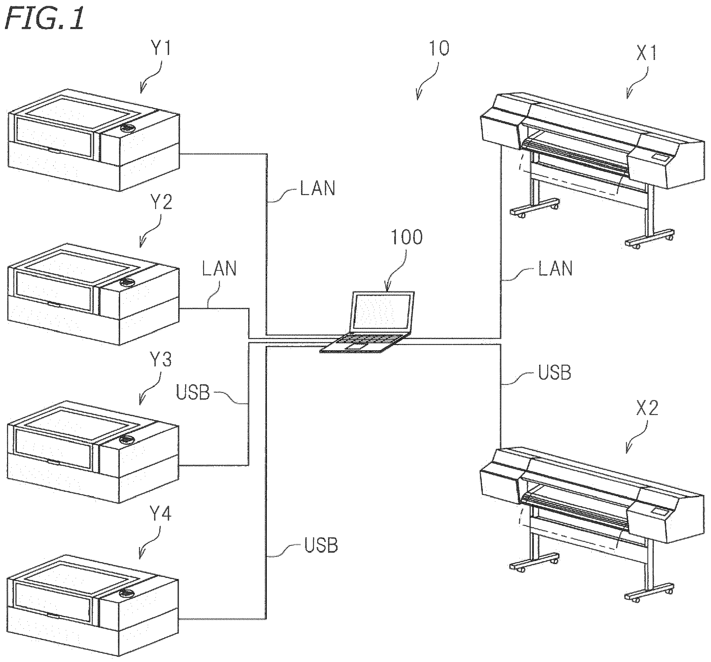

Fig. 1 is a schematic view illustrating an example of the configuration of a device management system 10 according to a preferred embodiment of the present invention. As illustrated in Fig. 1, a device management system 10 includes a device management apparatus 100 and six devices X1, X2, Y1, Y2, Y3, and Y4, for example, that are connected to the device management apparatus 100. Herein, each of the devices X1 to Y4 is a printer, for example.

Of the six devices X1 to Y4 connected to the device management apparatus 100, the devices X1 and X2 are printers of a first model type X. The devices Y1, Y2, Y3, and Y4 are printers of a second model type Y. The first model type X and the second model type Y are different from each other. Thus, the device management apparatus 100 is connected to a plurality devices of a plurality of types. The device management apparatus 100 is configured to be connectable to a plurality of types of devices, each type including a plurality of devices.

Hereinbelow, the devices X1 and X2 of the first model type X may be individually referred to as the first device X1 of the first model type and the second device X2 of the first model type, respectively, or may also be simply referred to as the first device X1 and the second device X2, respectively. Likewise, the devices Y1 to Y4 of the second model type Y may also be individually referred to as the first device Y1 of the second model type to the fourth device Y4 of the second model type, respectively, or may also be simply referred to as the first device Y1 to the fourth device Y4, respectively.

Each of the first device X1 of the first model type through the fourth device Y4 of the second model type is connected to the device management apparatus 100 via network or USB. In the example shown in Fig. 1, the first device X1 of the first model type is connected to the device management apparatus 100 via LAN (i.e., network). The second device X2 of the first model type is connected to the device management apparatus 100 via USB. The first device Y1 of the second model type is connected to the device management apparatus 100 via LAN (i.e., network). The second device Y2 of the second model type is connected to the device management apparatus 100 via LAN (i.e., network). The third device Y3 of the second model type is connected to the device management apparatus 100 via USB. The fourth device Y4 of the second model type is connected to the device management apparatus 100 via USB.

Herein, each of the devices X1 to Y4 is connected to the device management apparatus 100 either via network connection or via USB connection, but they may be connected via other types of connections.

The device management apparatus 100 collectively manages connected devices. Herein, the device management apparatus 100 collectively manages connected printers, for example. The device management apparatus 100, for example, transmits print jobs to the printers and acquires status information and error information from the printers. The device management apparatus 100 may be, for example, a computer installed with software that allows the computer to perform the functions as a management apparatus. However, the device management apparatus 100 is not limited to a computer, and may be a dedicated apparatus that is equipped with dedicated hardware such as circuitry, processor(s), etc.

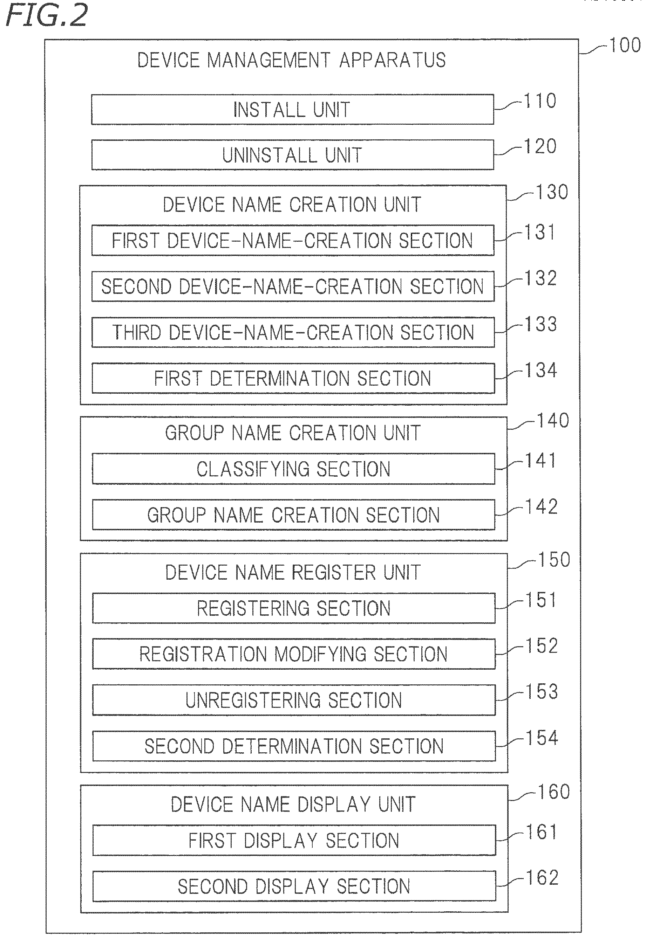

Fig. 2 is a block diagram of the device management apparatus 100. As illustrated in Fig. 2, the device management apparatus 100 is configured or programmed to include an install unit 110, an uninstall unit 120, a device name creation unit 130, a group name creation unit 140, a device name register unit 150, and a device name display unit 160. The device management apparatus 100 may also include other processing units or sections, but such additional processing units or sections are not shown or described herein.

The install unit 110 installs a driver corresponding to the device connected to the device management apparatus 100. For example, in the case shown in Fig. 1, the install unit 110 installs a driver that controls printers of the first model type X and a driver that controls printers of the second model type Y. The drivers are supplied to the device management apparatus 100 via a recording medium such as a CD, for example, and installed based on a user action.

The uninstall unit 120 selects a driver that is to be uninstalled, and uninstalls the selected driver. The driver that is to be uninstalled is selected, for example, based on a user action.

The device name creation unit 130 automatically creates entry names of the devices connected to the device management apparatus 100. As illustrated in Fig. 2, the device name creation unit 130 is configured or programmed to include a first device-name-creation section 131, a second device-name-creation section 132, a third device-name-creation section 133, and a first determination section 134.

The first device-name-creation section 131 is configured or programmed to create symbols indicative of the drivers corresponding to respective connected devices as device names of the connected devices. In the present preferred embodiment, the "symbols indicative of corresponding drivers" are model type names of the devices. Specific examples will be described later, taking the case of Fig. 1 as an example.

The second device-name-creation section 132 adds symbols each indicative of the connection method with the device management apparatus 100 to the symbols created by the first device-name-creation section 131. In the case of Fig. 1, the connection method between the devices X1 to Y4 and the device management apparatus 100 may be a network connection or a USB connection. Accordingly, in the case of Fig. 1, a symbol indicative of the network connection or the USB connection is added to each of the device names of the devices X1 to Y4. Specific examples will be described later, taking the case of Fig. 1 as an example. Note that, when a device is connected by a method other than the network connection or the USB connection, a symbol indicative of such other connection method should be added.

The first determination section 134 determines whether or not there is a duplicate symbol among the symbols created by the second device-name-creation section 132. Each of the symbols created by the second device-name-creation section 132 is a symbol created by the first device-name-creation section 131 (model type name herein) that is added with a symbol indicative of a connection method. There may be cases in which a plurality of devices of the same model type that are connected with the same connection method among the devices connected to the device management apparatus 100. For these devices, the symbols that are created by the second device-name-creation section 132 are duplicates. The first determination section 134 determines whether there is such a duplicate.

The third device-name-creation section 133 further adds identification symbols to the symbols each of which is determined to be a duplicate by the first determination section 134. In the present preferred embodiment, the third device-name-creation section 133 adds different digits as the identification symbols. Specific examples will be described later, taking the case of Fig. 1 as an example.

The group name creation unit 140 groups the connected devices according to a predetermined classification rule, and assigns respective group names to the groups. The group name creation unit 140 includes a classifying section 141 and a group name creation section 142.

The classifying unit 141 groups the connected devices by drivers. In the example shown in Fig. 1, the classifying section 141 groups the connected devices X1 to Y4 by drivers. Herein, the drivers correspond to the model types of devices. Therefore, the devices X1 to Y4 are grouped practically by model types. Accordingly, the classifying section 141 groups the devices X1 to Y4 into two groups, the group including the devices X1 and X2 and the group including the devices Y1 to Y4.

The group name creation section 142 assigns group names respectively to the groups that are grouped by the classifying section 141. In the present preferred embodiment, the group name creation section 142 assigns the model type name to the group name of each group. Specific examples will be described later, taking the case of Fig. 1 as an example.

The device name register unit 150 registers the symbols automatically created by the device name creation unit 130 as the device names of the devices. The device name register unit 150 also modifies the registered device names based on a user action. In addition, when the uninstall unit 120 uninstalls a driver, the device name register unit 150 unregisters the devices corresponding to the uninstalled driver. The device name register unit 150 is configured or programmed to include a registering section 151, a registration modifying section 152, an unregistering section 153, and a second determination section 154.

The registering section 151 registers the symbols created by the second device-name-creation section 132 or the third device-name-creation section 133 as the device names of the plurality of connected devices.

The registration modifying section 152 is configured or programmed to be capable of modifying the registered device names. Herein, the modification of the device names is carried out based on a user action.

The second determination section 154 determines whether or not the group name corresponds to the driver selected by the uninstall unit 120 for each of the groups that are grouped by the classifying section 141.

The unregistering section 153 unregisters the devices belonging to the group that is determined by the second determination section 154 to correspond to the driver to be uninstalled. Specific examples will be described later.

The device name display unit 160 displays the group names and device names that are registered in the device management apparatus 100. Herein, the device name display unit 160 causes the group names and device names to be displayed on a display device provided on the device management apparatus 100 or a display device connected to the device management apparatus 100. The device name display unit 160 includes a first display section 161 and a second display section 162.

The first display section 161 is configured to display group names for each of the groups grouped by the classifying section 141. In the present preferred embodiment, each of the groups is configured for each of the model types of the devices, and the group names are respectively identical to the model type names of the devices. Accordingly, the first display section 161 displays the model type name for every model type of the devices.

The second display section 162 displays the device names of the registered devices that belong to each of the groups inside a display representation that is allowed to be displayed by the first display section 161. Herein, inside the display representation that displays the model type name for every model type of the devices, the second display section 162 displays the device names of all the devices that belong to each model type. The details of the display operations performed by the first display section 161 and the second display section 162 will be will be described later.

Hereinbelow, the functions of the device management apparatus 100 will be described with reference to the device management system 10 shown in Fig. 1 as an example. First, the procedure for creating the group names and device names for the devices X1 to Y4 will be described.

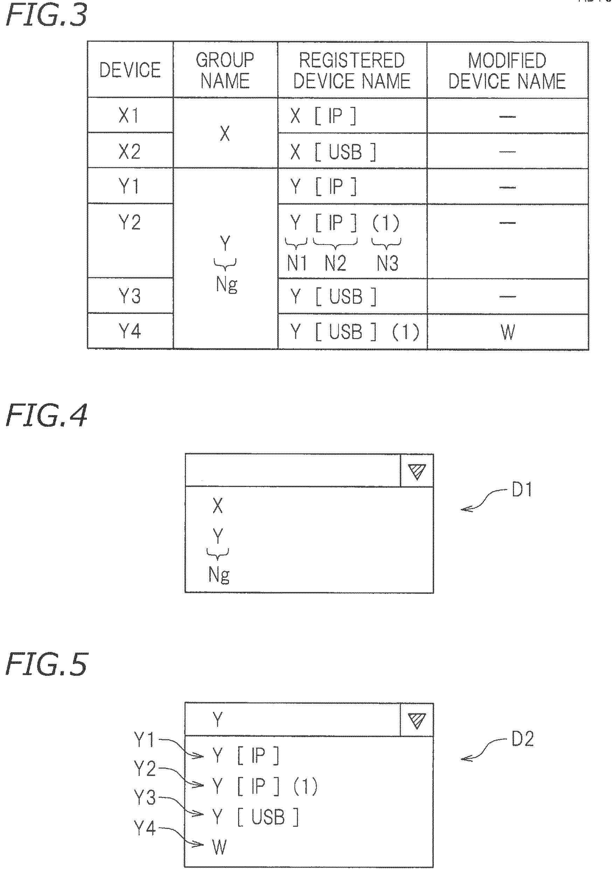

Fig. 3 is a table showing the configuration of group names and device names. In Fig. 3, each one of the rows represents one device. The leftmost field of each row represents a symbol (any one of X1 to Y4) that indicates a device shown in Fig. 1. The field on the right of the leftmost field shows the group name corresponding to the device. The field farther on the right shows an initial registered device name that is created by the device name creation unit 130. The rightmost field shows a registered device name that is modified by the user through the registration modifying section 152 after the registration. In Fig. 3, the registered device name of the fourth device Y4 of the second model type is modified by the user.

As illustrated in Fig. 3, the first device X1 of the first model type and the second device X2 of the first model type are grouped into one group. The first device Y1 of the second model type, the second device Y2 of the second model type, the third device Y3 of the second model type, and the fourth device Y4 of the second model type are also grouped into another group. As illustrated in Fig. 3, a group name Ng is assigned to each of the groups. The group name "X" is assigned to the group including the first device X1 of the first model type and the second device X2 of the first model type. The group name "Y" is assigned to the group including the first device Y1 of the second model type, the second device Y2 of the second model type, the third device Y3 of the second model type, and the fourth device Y4 of the second model type. In the present preferred embodiment, the group name Ng is in agreement with the model type name of the devices that belong to each of the groups.

As illustrated in Fig. 3, the second device Y2 of the second model type is registered with the device name "Y[IP] (1)", for example. The device name includes a driver-indicating portion N1, a connection method-indicating portion N2, and an identification symbol portion N3.

The driver-indicating portion N1 is created by the first device-name-creation section 131 based on the driver of the device. For example, as illustrated in Fig. 1, the model type of the second device Y2 is the second model type Y. Accordingly, the first device-name-creation section 131 first assigns a symbol "Y" to the device Y2 as the driver-indicating portion N1 of the device name of the device Y2. The symbol "Y" is the model type name of the device Y2.

The connection method-indicating portion N2 is created by the second device-name-creation section 132 based on the connection method of the device. For example, as illustrated in Fig. 1, the second device Y2 of the second model type is connected to the device management apparatus 100 via a network connection. Accordingly, the second device-name-creation section 132 adds the symbol "[IP]" to the device name of the second device Y2 of the second model type as the connection method-indicating portion N2. The symbol "[IP]" is the symbol indicative of network connection in the present preferred embodiment.

When the procedure for creating device names described hereinabove is applied to the other devices, the following device names are obtained. That is, the device name of the first device X1 of the first model type is "X[IP]". The device name of the second device X2 of the first model type is "X[USB]". The device name of the first device Y1 of the second model type is "Y[IP]". The device name of the third device Y3 of the second model type is "Y[USB]" . The device name of the fourth device Y4 of the second model type is "Y[USB]". Here, the symbol "[USB]" is a symbol indicative of USB connection in the present preferred embodiment.

Subsequently, in creating device names, duplicates of device names are determined by the first determination section 134. In the example of Fig. 1, the device name of the first device Y1 of the second model type and that of the second device Y2 of the second model type are both "Y[IP]" at this stage, so they are duplicates. Likewise, the device name of the third device Y3 of the second model type and that of the fourth device Y4 of the second model type are both "Y [USB] " at this stage, so they are also duplicates. Accordingly, these device names are the subject of addition of identification symbol portion N3 performed by the third device-name-creation section 133.

In the next step, an identification symbol portion N3 is added to each of the device names that is determined to be a duplicate by the first determination section 134. Herein, the identification symbol is a digit. The third device-name-creation section 133 adds the symbol "(1)" to the device name of the second device Y2 of the second model type as the identification symbol portion N3, and creates the device name "Y[IP](1)". Also, the third device-name-creation section 133 adds the symbol "(1)" to the device name of the fourth device Y4 of the second model type as the identification symbol portion N3, and creates the device name "Y[USB](1)". In the present preferred embodiment, no identification symbol is added to the device names of the first device Y1 of the second model type and the third device Y3 of the second model type, which remain to be "Y[IP]" and "Y[USB]", respectively. Thus, the identification symbol may not be added to one of the duplicate device names. In another preferred embodiment, however, it is possible that the device name "Y[IP] (1)" may be added to the first device Y1 of the second model type and the device name "Y[IP](2)" may be added to the second device Y2 of the second model type, for example. In still another preferred embodiment, the identification symbol may not be a digit. The type of the identification symbol is not limited to any type of symbol.

In the next step, the symbol created by the second device-name-creation section 132 or the third device-name-creation section 133 is registered as the device name in the registering section 151.

The initial device name of each of the devices that is registered in the above-described manner can be modified by the user. In the example shown in Fig. 3, the device name of the fourth device Y4 of the second model type is modified to "W". The device name after modification may be set to be any symbol.

The group names and registered device names of the devices X1 to Y4 are allowed to be displayed on a display device by the device name display unit 160. For the device name of the fourth device Y4 of the second model type, the device name after the modification is displayed. Figs. 4 and 5 are schematic views illustrating examples of display representations of group names and registered device names. Of the figures, Fig. 4 is a schematic view illustrating an example of a simple display D1. Fig. 5 is a schematic view illustrating an example of a detailed display D2. Figs. 4 and 5 correspond to the example shown in Fig. 1. As illustrated in Fig. 4, the simple display D1 lists the group names Ng of the devices connected to the device management apparatus 100. In other words, the simple display D1 displays the model type names of the devices that are connected to the device management apparatus 100. Herein, as illustrated in Fig. 4, the simple display D1 shows two group names "X" and "Y".

When the user selects "Y", for example, of the group names "X" and "Y" displayed in Fig. 4, the devices of the second model type Y are listed as the detailed display D2, as illustrated in Fig. 5. More specifically, the registered device name of the first device Y1, "Y[IP]", the registered device name of the second device Y2, "Y[IP] (1)", the registered device name of the third device Y3, "Y[USB]", and the registered device name of the fourth device Y4, "W", are listed. Here, the registered device name of the fourth device Y4 is modified, but the group name thereof remains to be "Y". Therefore, the fourth device Y4 is classified into the group "Y".

In another preferred embodiment, the classifying section 141 may group the connected devices by combination of a driver and a connection method. Then, the group name creation section 142 may assign group names Ng respectively to the groups that are grouped in such a manner. When this is applied to the case of Fig. 1, the connected devices X1 to Y4 are classified into four groups, the group of devices of the first model type X that are connected via network connection, the group of devices of the first model type X that are connected via USB connection, the group of devices of the second model type Y that are connected via network connection, and the group of devices of the second model type Y that are connected via USB connection. The group names Ng of these groups may be assigned as follows: for example, "X[IP]", "X[USB]", "Y[IP]", and "Y[USB]", respectively. This preferred embodiment allows the user to distinguish the devices easily even when the number of the connected devices is large.

Thus, in the device management apparatus 100 according to the present preferred embodiment, the device name creation unit 130 automatically creates symbols that enable the user to distinguish a plurality of devices. The created symbols are registered as device names. The device management apparatus 100 reduces or eliminates the burden of device management on the user.

Moreover, in the device management apparatus 100 according to the present preferred embodiment, the group names corresponding to the drivers are displayed first in the simple display D1, and the registered device names of the devices are displayed in the detailed display D2 inside the simple display D1. Such a display method provides improved visibility and relieves the burden on the user that is associated with device selection action. In addition, even when the user modifies an initial registered device name, the simple display D1 does not change, and the association between the devices and the groups does not change either.

When a driver is uninstalled, the devices corresponding to the driver are unregistered in the device management apparatus 100 according to the present preferred embodiment. In the present preferred embodiment, when a driver to be uninstalled is selected, it is determined whether or not a group name Ng corresponds to the driver selected by the uninstall unit 120 for each of the groups. Then, the devices belonging to the group that is determined to correspond to the driver are unregistered.

For example, when the driver that controls the devices of the first model type X is to be uninstalled, it is determined whether or not the group name Ng of each of the groups corresponds to the driver for the first model type X. In the case of Fig. 1, the group corresponding the driver for the first model type X is the group including the first device X1 of the first model type and the second device X2 of the first model type. Accordingly, the device management apparatus 100 unregisters the first device X1 of the first model type and the second device X2 of the first model type.

In this way, by contrasting the driver to be uninstalled with the group names Ng of the devices, the device management apparatus 100 is able to unregister the devices corresponding the driver at once. Note that the group names Ng are separate from the registered device names, so they are not changed even with the action of modifying the registered device name. Therefore, unregistering of the applicable devices is ensured.

Hereinabove, preferred embodiments of the present invention have been described. It should be noted, however, that the foregoing preferred embodiments are merely exemplary and the present invention may be embodied in various other forms. For example, in the foregoing preferred embodiments, although the devices connected to the device management apparatus are printers, other types of devices may be connected to the device management apparatus. Examples of the other types of devices include cutting machines and three-dimensional printing apparatuses. It is possible that the devices that are connectable to the device management apparatus may include printers, cutting machines, and three-dimensional printing apparatuses. It is also possible that all of these types of devices may be connected to the device management apparatus.

Furthermore, the layouts, types, and modes of the display screen are not limited to those described above.

In the foregoing preferred embodiments, a second technique of performing a simple display and a detailed display and a third technique of unregistering, in association with uninstalling of a driver, all the devices related to the driver are added over a first technique of distinguishing a plurality of devices of the same model type. However, the first technique to the third technique may be implemented independently from one another.

The terms and expressions used herein are for description only and are not to be interpreted in a limited sense. These terms and expressions should be recognized as not excluding any equivalents to the elements shown and described herein and as allowing any modification encompassed in the scope of the claims. The present invention may be embodied in many various forms. This disclosure should be regarded as providing preferred embodiments of the principles of the present invention. These preferred embodiments are provided with the understanding that they are not intended to limit the present invention to the preferred embodiments described in the specification and/or shown in the drawings. The present invention is not limited to the preferred embodiments described herein. The present invention encompasses any of preferred embodiments including equivalent elements, modifications, deletions, combinations, improvements and/or alterations which can be recognized by a person of ordinary skill in the art based on the disclosure. The elements of each claim should be interpreted broadly based on the terms used in the claim, and should not be limited to any of the preferred embodiments described in this specification or referred to during the prosecution of the present application.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A device management apparatus configured or programmed to be connectable to a plurality of devices of a plurality of types, the device management apparatus being configured or programmed to comprise:
an install unit configured or programmed to install drivers corresponding to connected devices;
a first device-name-creation section configured or programmed to create symbols respectively indicative of the drivers corresponding to the connected devices as device names of the connected devices;
a second device-name-creation section configured or programmed to add symbols each indicative of a connection method with the device management apparatus to the symbols created by the first device-name-creation section;
a first determination section configured or programmed to determine whether or not there is a duplicate symbol among the symbols created by the second device-name-creation section;
a third device-name-creation section configured or programmed to add identification symbols to symbols each being determined as the duplicate symbol by the first determination section; and
a registering section configured or programmed to register the symbols created by the second device-name-creation section or the third device-name-creation section as the device names of the plurality of connected devices.

2. The device management apparatus according to claim 1, wherein the third device-name-creation section adds a different digit to each of the duplicate symbols as the identification symbol.

3. The device management apparatus according to claim 1 or 2, further comprising:
a classifying section configured or programmed to group the connected devices by the drivers; and
a group name creation section configured or programmed to assign group names respectively to the groups that are grouped.

4. The device management apparatus according to claim 3, further comprising:
a first display section configured or programmed to display group names for each of the groups grouped by the classifying unit; and
a second display section configured or programmed to display, inside a display representation that is allowed to be displayed by the first display section, the registered device names that belong to each of the groups.

5. The device management apparatus according to claim 3 or 4, further comprising:
an uninstall unit configured or programmed to select a driver to be uninstalled;
a second determination section configured or programmed to determine whether or not the group name corresponds to the driver selected by the uninstall unit for each of the groups; and
an unregistering section configured or programmed to unregister devices belonging to the group determined to correspond to the selected driver by the second determination section.

6. The device management apparatus according to claim 1 or 2, further comprising:
a classifying section configured or programmed to group the connected devices by combination of a connection method and a driver; and
a group name creation section configured or programmed to assign group names respectively to the groups that are grouped.

7. The device management apparatus according to any one of claims 1 through 6, wherein the connectable devices include a printer.

8. The device management apparatus according to any one of claims 1 through 7, wherein the connectable devices include a cutting machine.

9. The device management apparatus according to any one of claims 1 through 8, wherein the connectable devices include a three-dimensional printing apparatus.
